# FASCICULE DE BREVET EUROPEEN

(11) **EP 4 157 188 B1**
(45) Date de publication et mention de la délivrance du brevet: **17.07.2024**
(21) Numéro de dépôt: 21724613.1
(22) Date de dépôt: 05.05.2021
(51) Int. Cl.: A61G 7/08, B62B 3/04

(54) **SYSTEME DE PROPULSION ELECTRONIQUE AMOVIBLE POUR UN OBJET ROULANT AVEC UN MOYEN DE BLOCAGE DIRECTIONNEL AUTOMATIQUE**
ABNEHMBARES ELEKTRONISCHES ANTRIEBSSYSTEM FÜR EIN ROLLENDES OBJEKT MIT AUTOMATISCHER RICHTUNGSBLOCKIERUNG
REMOVABLE ELECTRONIC PROPULSION SYSTEM FOR A ROLLING OBJECT WITH AN AUTOMATIC DIRECTIONAL BLOCKING MEANS

(30) Priorité: 29.05.2020 FR 2005677
(43) Date de publication de la demande: 05.04.2023
(73) Titulaire: IFP Energies nouvelles, 92500 Rueil-Malmaison (FR)
(72) Inventeur: VENTURI, Stephane, 92852 RUEIL-MALMAISON CEDEX (FR); LECOINTE, Bertrand, 92852 RUEIL-MALMAISON CEDEX (FR)
(74) Mandataire: IFP Energies nouvelles
(86) Numéro de dépôt international: PCT/EP2021/061868
(87) Numéro de publication internationale: WO 2021/239419

(56) Documents cités:
- WO-A1-2018/174781
- US-A1- 2006 102 392
- US-A1- 2017 119 607

## Description

### Domaine technique

L'invention concerne le domaine de transport des objets roulants, en particulier des lits roulants, par exemple des lits d'hôpitaux.

Le déplacement des charges lourdes roulantes par un utilisateur peut entraîner des difficultés pour l'utilisateur, en particulier si cette action est répétée, telles que des troubles musculo-squelettiques.

### Technique antérieure

Afin de rendre le déplacement des charges lourdes roulantes plus facile et plus ergonomique, il a été envisagé d'équiper ces charges lourdes de machines électriques. Par exemple, une première idée a consisté à équiper chaque lit d'hôpital d'un système d'entraînement électrique des roues. Une telle solution est onéreuse, car elle nécessite le remplacement ou la modification de l'ensemble des lits, ce que les hôpitaux ne peuvent pas se permettre. De plus, le système d'entraînement et sa batterie augmentent le poids du lit. Par conséquent, lorsque la batterie est déchargée, les efforts à fournir pour déplacer le lit sont plus importants.

De la même façon, dans le domaine de la logistique ou du commerce, il a été envisagé de rendre électrique tous les chariots. Là aussi, une telle solution est onéreuse.

Une alternative est de prévoir un système amovible de propulsion des objets roulants. Plusieurs solutions techniques ont été envisagées.

Par exemple, la demande de brevet WO 01/85086 décrit un système de propulsion motorisé pour un lit. Le système de propulsion est configuré pour s'atteler à un ou plusieurs points du lit. De par les moyens d'attelage prévus pour ce système de propulsion, ce système ne peut pas être universel et adapté à différents objets roulants. En effet, il ne peut pas être attelé à un objet roulant non muni d'une pièce d'attelage. De plus, pour ce système de propulsion, toutes les roues de l'objet roulant restent en contact avec le sol. Par conséquent, l'orientation de l'attelage (système de propulsion et lit) est plus compliquée, les forces de frottement sont élevées, et la roue motorisée nécessite plus de puissance. De plus, comme toutes les roues de l'objet roulant restent en contact avec le sol, les déplacements de l'ensemble sont difficiles, notamment dans des espaces restreints.

La demande de brevet WO 2012/171079 décrit un deuxième système de propulsion d'un lit d'hôpital. Le système de propulsion est configuré pour lever deux roues du lit. Toutefois, le mécanisme de préhension des roues est complexe et encombrant : la dimension latérale (direction parallèle à l'axe des roues motorisées) est importante (supérieure à la largeur des roues du lit) et peut dépasser les dimensions latérales du lit, ce qui peut être gênant pour le déplacement du lit, en particulier dans un espace réduit tel qu'un couloir ou un ascenseur d'hôpital.

La demande de brevet WO 2013/156030 décrit un troisième système de propulsion d'un lit d'hôpital. Le système de propulsion est configuré pour lever deux roues du lit. Toutefois, le système présente des dimensions latérale (direction parallèle à l'axe des roues motorisées) et longitudinale (direction perpendiculaire à l'axe des roues) qui sont importantes : la plateforme arrière dépasse le lit et la distance entre les roues non motorisées peut dépasser les dimensions du lit, ce qui peut être gênant pour le déplacement du lit, en particulier dans un espace réduit, tel qu'un couloir ou un ascenseur d'hôpital.

La demande de brevet US 2006/102392 décrit un quatrième système de propulsion d'un lit d'hôpital.

Pour résoudre les problématiques de l'art antérieur, le but de l'invention est de proposer un système adaptable à différents objets roulants et assurant une manoeuvrabilité élevée, notamment dans des espaces restreints.

Pour se faire, la présente invention concerne un système de propulsion électrique amovible destiné à être attelé à un objet roulant. Le système de propulsion comprend un châssis muni d'au moins une roue entraînée par une machine électrique, et d'au moins une roue non entraînée. Au moins une des roues non entraînées est une roue décentrée orientable. De plus, le système, de préférence le châssis, comprend des moyens d'attelage du système de propulsion à l'objet roulant, les moyens d'attelage comprenant des moyens de préhension et de levage d'au moins une roue de l'objet roulant. De plus, le système comprend un moyen de blocage directionnel automatique pour bloquer automatiquement, dans une direction prédéterminée, la rotation autour d'un axe vertical d'au moins une roue décentrée orientable.

### Résumé de l'invention

L'invention concerne un système de propulsion électrique amovible pour un objet roulant, ledit système de propulsion comprenant un châssis muni d'au moins une roue entrainée par une machine électrique et d'au moins une roue non entraînée, au moins une desdites au moins une roue non entraînée comprenant une roue décentrée orientable, ledit système de propulsion électrique comprenant des moyens d'attelage dudit système de propulsion électrique audit objet roulant, lesdits moyens d'attelage comprenant des moyens de préhension et de levage d'au moins une roue dudit objet roulant. De plus, le système de propulsion électrique comprend un moyen de blocage directionnel automatique pour bloquer, dans une direction prédéterminée, la rotation autour d'un axe vertical d'au moins une desdites roues décentrées orientables, de préférence la direction prédéterminée étant selon l'axe longitudinal du châssis, l'axe longitudinal (x) étant défini par la direction principale de déplacement du châssis.

Avantageusement, le moyen de blocage directionnel automatique bloque au moins une desdites roues décentrées orientables blocables dans la direction de la roue entraînée. Selon une alternative de l'invention, le moyen de blocage directionnel automatique bloque au moins une desdites roues décentrées orientables blocables dans la direction opposée à la roue entraînée.

De préférence, le système de propulsion électrique comprend au moins deux roues décentrées orientables blocables, le moyen de blocage directionnel automatique bloquant lesdites au moins deux roues décentrées orientables blocables dans ladite direction prédéterminée.

Préférentiellement, lesdits moyens d'attelage comprennent des moyens d'orientation d'au moins une roue dudit objet roulant dans une direction formant un angle non nul avec la direction longitudinale dudit châssis dudit système de propulsion électrique, de préférence lesdits moyens d'attelage comprennent des moyens d'orientation d'au moins une roue dudit objet roulant dans une direction sensiblement perpendiculaire à la direction longitudinale dudit châssis dudit système de propulsion électrique.

Selon une configuration avantageuse de l'invention, ledit moyen de blocage directionnel automatique comprend au moins deux éléments connecteurs configurés pour coopérer l'un avec l'autre de manière à assurer le blocage directionnel, un premier élément connecteur étant positionné sur au moins une desdites roues décentrées orientables blocables et un deuxième élément connecteur étant positionné sur ledit châssis, de préférence l'un desdits deux éléments connecteurs est un élément mâle et l'autre desdits deux éléments connecteurs est un élément femelle, l'emboitement dudit élément mâle dans ledit élément femelle assurant ledit blocage directionnel.

De manière avantageuse, le moyen de blocage directionnel automatique comprend au moins deux éléments femelles et/ou au moins deux éléments mâles.

Selon une mise en oeuvre de l'invention, lesdits éléments mâles comprennent au moins un pion, un doigt et/ou une clavette.

Selon un mode de réalisation de l'invention, lesdits éléments femelles comprennent des trous cylindriques, des trous oblongs et/ou des rainures.

De préférence, ledit moyen de blocage directionnel automatique comprend un moyen de commande de déblocage, ledit moyen de commande de déblocage comprenant de préférence un électroaimant, le moyen de commande de déblocage étant de préférence manuel.

Avantageusement, le moyen de blocage directionnel automatique bloque au moins une desdites roues décentrées orientables blocables par le mouvement opposé à ladite direction prédéterminée du système de propulsion électrique et/ou de l'objet roulant.

Le châssis comprend au moins deux parties reliées entre elles par une liaison pivot d'axe transversal et/ou par une glissière longitudinale, ledit moyen de blocage directionnel automatique étant configuré pour bloquer au moins une desdites roues décentrées orientables blocables par le mouvement relatif desdites deux parties.

Selon une variante de l'invention, au moins une desdites deux parties comprend au moins un bras de longueur variable, au moins une desdites roues décentrées orientables blocables étant positionnée sensiblement à une extrémité dudit bras de longueur variable.

De préférence, lesdites deux parties sont reliées par une structure articulée en partie centrale du châssis entre au moins une des roues entraînées et au moins une desdites roues décentrées orientables.

L'invention concerne aussi un attelage comprenant un objet roulant et un système de propulsion électrique tel que décrit précédemment, ledit objet roulant étant attelé audit système de propulsion électrique par lesdits moyens d'attelage.

L'invention concerne également un procédé pour bloquer directionnellement au moins une desdites roues décentrées orientables blocables d'un système de propulsion électrique amovible tel que décrit précédemment, pour lequel on effectue un mouvement de l'objet roulant et/ou du système de propulsion électrique pour positionner au moins une desdites roues décentrées orientables blocables dans ladite direction prédéterminée, et on bloque directionnellement au moins une desdites roues décentrées orientables blocables, de manière automatique.

De préférence, on effectue un mouvement de rotation et/ou de translation d'au moins une des parties du châssis, relativement à l'autre partie du châssis pour positionner au moins une desdites roues décentrées orientables blocables dans ladite direction prédéterminée, et on bloque directionnellement au moins une desdites roues décentrées orientables blocables, de manière automatique.

Avantageusement, on augmente la longueur dudit bras de longueur variable à sa position maximale puis on diminue la longueur dudit bras de longueur variable pour positionner au moins une desdites roues décentrées orientables blocables dans la direction opposée à la roue entraînée (3) et on bloque de manière automatique au moins une desdites roues décentrées orientables blocables dans ladite direction opposée à la roue entraînée.

### Liste des figures

D'autres caractéristiques et avantages du système et du procédé selon l'invention, apparaîtront à la lecture de la description ci-après d'exemples non limitatifs de réalisations, en se référant aux figures annexées et décrites ci-après.
La figure 1 est une vue de dessus d'un système de propulsion électrique selon un mode de réalisation de l'invention.
La figure 2 est une vue de côté d'un système de propulsion électrique selon une première variante de réalisation de l'invention.
La figure 3 est une vue de côté d'un système de propulsion électrique selon une deuxième variante de réalisation de l'invention.
La figure 4 est une vue de dessus d'un système de propulsion électrique selon un mode de réalisation attelé à un objet roulant, selon l'invention.
La figure 5 représente une première méthode pour bloquer directionnellement au moins une roue décentrée orientable d'un système de propulsion de l'invention.
La figure 6a représente un premier mode de réalisation, en mode déverrouillé, d'un moyen de blocage directionnel d'un système de propulsion l'invention.
La figure 6b représente le moyen de blocage directionnel de la figure 6a en mode verrouillé.
La figure 7 représente le désaxage lorsque la roue est bloquée directionnellement dans la direction opposée à la roue motrice.
La figure 8 représente un procédé de blocage directionnel d'au moins une roue décentrée orientable d'un système de propulsion de l'invention avec un châssis pliable.
La figure 9a représente un premier mode de réalisation d'un système de propulsion de l'invention, attelé à l'objet roulant, avec une partie du châssis extensible, en position repliée.
La figure 9b représente un premier mode de réalisation d'un système de propulsion de l'invention, attelé à l'objet roulant, avec une partie du châssis extensible, en position dépliée.

### Description des modes de réalisation

L'invention concerne un système de propulsion électrique amovible pour un objet roulant.

On appelle système de propulsion électrique un système amovible permettant d'assister le déplacement de l'objet roulant, afin de limiter les efforts requis pour le déplacement de l'objet roulant. Ce système de propulsion électrique comporte au moins une machine électrique pour son entraînement. Un objet roulant est un objet qui comporte au moins deux roues afin de le déplacer.

L'objet roulant peut être de toute forme, notamment un lit roulant, tel que notamment ceux utilisés dans les hôpitaux, un fauteuil roulant, un chariot, tel qu'utilisé pour la logistique, par exemple la logistique hospitalière ou la logistique commerciale (selon un exemple un chariot de supermarché), tout meuble roulant. Un tel objet roulant comporte au moins deux roues, de préférence trois ou quatre. Avantageusement, au moins une roue, de préférence, deux roues de l'objet roulant sont des roues folles, en d'autres termes ce sont des roues décentrées orientables autour d'un axe vertical. L'objet roulant est de préférence non motorisé.

Le système de propulsion électrique selon l'invention comporte :
- Un châssis muni d'au moins une roue motorisée, c'est-à-dire une roue entraînée par une machine électrique, et au moins une roue non motorisée, c'est-à-dire non entraînée par une machine électrique. De préférence, le châssis comprend au moins deux roues non motorisées.
- Des moyens d'attelage du système de propulsion à un objet roulant, les moyens d'attelage comportent des moyens de préhension et de levage d'au moins une roue de l'objet roulant, de préférence deux roues de l'objet roulant, en d'autres termes, les moyens d'attelage sont configurés pour agripper (saisir) et lever au moins une roue de l'objet roulant.

Parmi les roues non entraînées, l'une au moins est une roue décentrée orientable et de préférence, le système a au moins deux roues décentrées orientables.

Par roues décentrées orientables, on entend des roues folles décentrées et orientables autour d'un axe vertical. En d'autres termes, ces roues peuvent pivoter par rapport au châssis autour d'un axe d'orientation verticale, et l'axe de rotation de la roue est décentré (non concourant) par rapport à l'axe d'orientation verticale. Ainsi, un mouvement appliqué au châssis tend à orienter la roue dans la direction opposée au déplacement issu du mouvement appliqué au châssis. Les roues s'orientent donc de manière automatique, facilitant ainsi la manoeuvrabilité du système.

De préférence, le système de propulsion électrique peut comporter un guidon, permettant la manipulation, le déplacement et l'orientation du système de propulsion électrique par un utilisateur.

L'attelage de l'objet roulant au système de propulsion est réalisé par au moins une roue de l'objet roulant, de préférence par au moins une roue folle de l'objet roulant. L'objet roulant ne nécessite donc pas d'être adapté pour le système de propulsion électrique, ce qui rend le système de propulsion électrique universel à différents objets roulants. De préférence, l'attelage de l'objet roulant au système de propulsion peut être réalisé par deux roues de l'objet roulant, ce qui simplifie le procédé d'attelage et le moyen d'attelage associé.

En outre, le système comprend un moyen de blocage directionnel automatique pour bloquer automatiquement, dans une direction prédéterminée, la rotation autour de l'axe vertical d'au moins une roue décentrée orientable. Les roues décentrées orientables qui peuvent être bloquées par un moyen de blocage directionnel sont dites « roues décentrées orientables blocables ». En d'autres termes, au moins une des roues initialement folles (c'est-à-dire libre de s'orienter dans toutes les directions) peut être bloquée dans une direction prédéterminée autour de l'axe vertical. Le moyen de blocage directionnel automatique n'empêche pas la rotation des roues décentrées orientables blocables autour de leur axe de rotation (qui est horizontal). Ce moyen de blocage directionnel automatique n'est donc pas un moyen de freinage. Le moyen de blocage directionnel automatique empêche la roue décentrée orientable de s'auto-orienter. Elle est donc bloquée dans une direction donnée, par exemple dans la direction longitudinale. Le moyen de blocage directionnel automatique permet de bloquer la roue automatiquement, sans intervention de l'utilisateur lorsque la roue est dans la direction souhaitée.

Par direction de la roue décentrée orientable, on entend la direction donnée par la direction perpendiculaire à l'axe vertical décentrée de la roue décentrée orientable passant par le centre de la roue décentrée orientable, le sens de cette direction allant de l'axe vertical décentré de la roue décentrée orientable au centre de la roue décentrée orientable.

Ce moyen de blocage directionnel automatique permet d'améliorer la manoeuvrabilité du système de propulsion, notamment lorsqu'il est attelé à l'objet roulant. En effet, en bloquant au moins une roue décentrée orientable dans la direction prédéterminée, on obtient un effet dit « 5^{ème} roue ». Cet effet consiste, par au moins une roue bloquée directionnellement, à créer un point de pivot, ce point de pivot étant sensiblement autour de cette roue bloquée si le système n'a qu'une seule roue décentrée orientable bloquée. Ainsi, il est possible de faire pivoter le système attelé autour de ce point de pivot. Lorsque deux roues sont bloquées directionnellement, par exemple deux roues décentrés orientables étant situées à une extrémité longitudinale du châssis éloignée de l'autre extrémité longitudinale du châssis qui supporte au moins une roue entraînée, le point de pivot généré par l'effet 5^{ème} roue est situé au milieu des deux roues décentrées orientables blocables.

Dans tous les cas, la création de ce point de pivot permet de faciliter les manoeuvres du système attelé, notamment dans un espace restreint comme un ascenseur ou un couloir d'hôpital.

De plus, le moyen de blocage directionnel étant automatique, le blocage directionnel est réalisé dès que la roue décentrée orientable blocable se trouve dans la position prédéterminée. Le fait que le moyen de blocage directionnel soit automatique permet de simplifier les opérations de blocage directionnel pour l'utilisateur. De plus, le blocage directionnel automatique permet de réaliser un blocage directionnel toujours dans la direction prédéterminée, la direction longitudinale par exemple.

Par exemple, ce blocage directionnel automatique peut être réalisé par un système armé, prêt à s'engager dès que la roue décentrée orientable blocable arrive dans la position prédéterminée. Le système peut être armé par exemple à l'aide d'un ressort ou tout mécanisme analogue.

De préférence, la direction prédéterminée peut être selon l'axe longitudinal du châssis, l'axe longitudinal pouvant être défini par l'axe reliant au moins une roue entraînée à au moins une roue décentrée orientable, de préférence à au moins une roue décentrée orientable blocable, correspondant ainsi à la direction principale de déplacement du système de propulsion électrique. Par exemple, une roue entraînée est située à une extrémité du châssis et deux roues décentrées orientables (dont une au moins et de préférence les deux, sont des roues décentrées orientables blocables) sont positionnées à l'autre extrémité du châssis. L'axe longitudinal est alors défini par l'axe passant par la roue entraînée et passant par le milieu des deux roues décentrées orientables. Ainsi, la direction prédéterminée est dans la direction longitudinale (de la roue entraînée vers les roues décentrées orientables le long de l'axe longitudinal ou inversement), qui est de préférence la direction longitudinale de l'objet roulant, du lit par exemple, de manière à faciliter le déplacement de l'objet roulant et sa manoeuvrabilité.

Dans la suite de la description, les termes « longitudinaux », « transversaux », « horizontaux » et « verticaux » déterminent les axes et/ou directions du système lorsque le système est posé sur un sol plan et de niveau (c'est-à-dire sur un sol sans pente, en d'autres termes, il n'y a pas de différences d'altitude sur le sol) et en situation de fonctionnement.

La direction longitudinale correspond à la direction principale de déplacement du système de propulsion électrique.

La direction transversale est la direction orthogonale à la direction longitudinale du système dans le plan horizontal.

La direction verticale est orthogonale au plan horizontal du système.

Selon une configuration de l'invention, le moyen de blocage directionnel automatique peut bloquer au moins une roue décentrée orientable dans la direction de la roue entraînée. Par roue décentrée orientable dans la direction de la roue entraînée, on entend qu'en partant de son axe vertical décentré, la roue décentrée orientable est dirigée dans la direction prédéterminée et dans le sens situé du côté vers la roue entraînée. Autrement dit, en vue de côté, le centre de la roue décentrée orientable se trouve entre l'axe vertical de cette roue et le centre de la roue entraînée. De ce fait, un simple mouvement en avant du système de propulsion oriente les roues décentrées orientables dans la direction de la roue entraînée. Lorsque le système comprend au moins un bras extensible, un allongement du bras extensible permet l'orientation des roues décentrées orientables dans la direction de la roue entraînée. Ainsi, le moyen de blocage directionnel automatique peut bloquer la roue décentrée orientable directionnellement par un simple mouvement en avant du système. Le blocage directionnel des roues décentrées orientables est automatique et donc simple à réaliser.

Selon une variante de l'invention, le système peut comprendre un moteur pour orienter la roue décentrée orientable dans la direction de la roue entraînée et de ce fait bloquer la roue décentrée orientable dans cette direction par le moyen de blocage directionnel automatique.

Selon une variante de l'invention, le moyen de blocage directionnel automatique peut bloquer au moins une roue décentrée orientable dans la direction opposée à la roue entraînée. Par roue décentrée orientable dans la direction opposée à la roue entraînée, on entend qu'en partant de son axe vertical, la roue décentrée orientable est dirigée dans la direction prédéterminée et dans le sens situé à l'opposé du côté où est positionnée la roue entraînée. Autrement dit, en vue de côté, l'axe vertical de la roue décentrée orientable est positionné entre le centre de la roue entraînée et le centre de la roue décentrée orientable blocable. Ce blocage directionnel dans la direction opposée à la roue entraînée peut par exemple être obtenu par un mouvement du système de propulsion vers l'arrière ou par un raccourcissement du bras extensible lorsque le système comprend un tel bras. Selon une variante, un moteur peut également permettre à orienter les roues décentrées orientables dans la direction opposée à la roue entraînée. Cette configuration est avantageuse car en positionnant la roue décentrée orientable dans la direction opposée à la roue entraînée, la distance entre la roue entraînée et la roue décentrée orientable bloquée est maximale puisque l'axe de la roue décentrée orientable est positionné entre le centre de la roue décentrée orientable et le centre de la roue entraînée. Ainsi, l'effet « 5^{ème} roue » est amélioré et la manoeuvrabilité du système est plus aisée. Ce positionnement de la roue décentrée orientable bloquée permet de s'approcher au plus près du centre de l'objet roulant et donc de permettre une manoeuvrabilité améliorée.

Selon un mode de réalisation avantageux, le système de propulsion peut comprendre au moins deux roues décentrées orientables blocables, le moyen de blocage directionnel automatique bloquant les au moins deux roues décentrées orientables blocables dans la direction prédéterminée. Ainsi, le châssis peut par exemple comprendre une roue entraînée à une extrémité longitudinale du châssis et deux roues décentrées orientables blocables à l'autre extrémité longitudinale du châssis, les axes des roues décentrées orientables pouvant être de préférence coaxiales lorsqu'elles sont bloquées directionnellement de manière à faciliter la manoeuvrabilité du système. Le point de pivot généré par le blocage des roues décentrées orientables blocables est positionné au milieu des centres de ces roues décentrées orientables et blocables.

Préférentiellement, les moyens d'attelage peuvent comprendre des moyens d'orientation d'au moins une roue de l'objet roulant dans une direction formant un angle non nul avec la direction longitudinale du châssis du système de propulsion et de préférence, les moyens d'attelage peuvent comprendre des moyens d'orientation d'au moins une roue de l'objet roulant dans une direction sensiblement perpendiculaire à la direction longitudinale du châssis dudit système de propulsion. De ce fait, l'objet roulant est immobilisé de manière simple avec le système de propulsion : autrement dit, aucun mouvement relatif entre l'objet roulant et le système de propulsion n'est possible.

Selon une mise en oeuvre du système, le moyen de blocage directionnel automatique peut comprendre au moins deux éléments connecteurs configurés pour coopérer l'un avec l'autre de manière à assurer le blocage directionnel, un premier élément connecteur étant positionné sur au moins une roue décentrée orientable blocable et un deuxième élément connecteur étant positionné sur le châssis. Lorsqu'ils coopèrent, les deux éléments connecteurs bloquent la roue décentrée orientable blocable directionnellement. Ainsi, la roue décentrée orientable ne peut plus tourner librement autour de son axe vertical. Elle ne peut plus s'auto-orienter.

L'un des deux éléments connecteurs peut notamment être armé, c'est-à-dire qu'il est configuré pour coopérer automatiquement avec l'autre élément connecteur. Il peut pour cela comprendre un ressort ou tout système analogue.

De préférence, l'un des éléments connecteurs peut être un élément mâle et l'autre des éléments connecteurs est un élément femelle, l'emboîtement de l'élément mâle dans l'élément femelle assurant le blocage directionnel. Ainsi, le blocage directionnel peut être réalisé de manière simple, et l'élément mâle peut être armé de manière à s'insérer automatiquement dans l'élément femelle lorsque l'élément femelle se trouve dans la direction prédéterminée.

De préférence, le moyen de blocage directionnel automatique peut comprendre au moins deux éléments femelles et/ou deux éléments mâles. Lorsque le moyen de blocage directionnel comprend un élément mâle et deux éléments femelles ou lorsqu'il comprend deux éléments mâles et un élément femelle, il est possible de bloquer directionnellement une roue décentrée orientable dans deux positions différentes, par exemple il est possible de bloquer la roue décentrée orientable dans la direction prédéterminée vers la roue entraînée et celle opposée à la roue entraînée, ce qui permet de faciliter l'utilisation du système et les possibilités de blocage directionnel des roues décentrées orientables.

Lorsque le moyen de blocage directionnel comprend deux éléments mâles et deux éléments femelles, le nombre de directions prédéterminées peut être encore augmenté, ce qui permet encore d'augmenter les possibilités de blocage directionnel. Ce type de moyen de blocage permet également de bloquer directionnellement deux roues décentrées orientables simultanément.

Selon une variante de l'invention, les éléments mâles (au moins un élément mâle) peuvent comprendre au moins un pion, un doigt ou une clavette. De ce fait, ils peuvent s'insérer aisément dans un orifice, que ce soit un trou cylindrique, oblong ou une rainure.

Selon une mise en oeuvre de l'invention, les éléments femelles (au moins un élément femelle) peuvent comprendre des trous cylindriques, des trous oblongs et/ou des rainures. Ainsi, ils sont aptes à coopérer facilement avec les éléments mâles précités (pion, doigt ou clavette).

De manière avantageuse, le moyen de blocage directionnel automatique peut comprendre un moyen de commande de déblocage. En effet, le moyen de commande de déblocage peut être utilisé pour débloquer le moyen de blocage directionnel automatique ou pour éviter le blocage directionnel des roues décentrées orientables, qui est automatique en fonctionnement normal, quand on ne souhaite pas bloquer directionnellement les roues décentrées orientables. Conserver le fonctionnement en roues libres (roues folles) est possible en évitant le blocage directionnel automatique des roues grâce au moyen de commande de déblocage, et cela est particulièrement avantageux par exemple lorsqu'on souhaite pousser latéralement (transversalement) l'objet roulant (le lit par exemple) attelé au système de propulsion électrique pour le placer le long d'une cloison.

Eviter le blocage directionnel intempestif des roues décentrées orientables est également avantageux pendant les phases d'attelage, lorsque les bras portant les moyens de préhension et de levage sont écartés ou approchés l'un de l'autre, de manière à faciliter la préhension et le levage des roues de l'objet roulant.

Eviter le blocage directionnel intempestif des roues décentrées orientables peut également être utile pour conserver le comportement d'origine de l'objet roulant (par exemple, lorsque le brancardier a l'habitude de manipuler un lit d'hôpital) en bloquant directionnellement les roues de l'objet roulant encore au sol au lieu de bloquer les roues décentrées orientables blocables du système de propulsion.

De préférence, le moyen de commande de déblocage peut comprendre un électroaimant. Ainsi, la commande de déblocage peut être facilement activée et le moyen de commande de déblocage est léger et peu encombrant. Le moyen de commande de déblocage peut être de préférence manuel, c'est-à-dire commandé manuellement, par exemple, pour un bouton poussoir, un levier ou autre.

Selon un mode de réalisation avantageux de l'invention, le moyen de blocage directionnel automatique bloque au moins une roue décentrée orientable blocable par le mouvement opposé à la direction prédéterminée du système de propulsion et/ou de l'objet roulant. Ainsi, le mouvement appliqué au système de propulsion et/ou à l'objet roulant, oriente la roue décentrée orientable blocable dans la direction prédéterminée, et le moyen de blocage directionnel automatique bloque cette roue dans cette direction.

Le châssis comprend au moins deux parties reliées entre elles par une liaison pivot d'axe transversal et/ou par une glissière longitudinale. Ainsi, les deux parties du châssis peuvent se déplacer l'une relativement à l'autre soit par une rotation autour d'un axe horizontal (transversal par exemple), soit par une translation, par exemple une translation longitudinale. De ce fait, les deux extrémités du châssis peuvent s'approcher l'une de l'autre ou au contraire s'écarter. Ainsi, la distance entre la roue entraînée et la roue décentrée orientable blocable peut être augmentée.

Lorsque les parties sont reliées par une rotation, le châssis est pliable. Cette configuration permet d'avoir les axes initialement verticaux des roues décentrées orientables, orientés avec un angle non nul par rapport à la direction verticale. En n'étant plus verticaux, les axes favorisent l'orientation des roues décentrées orientables dans la direction souhaitée. Ainsi, la manoeuvrabilité du système peut être améliorée. De plus, le déplacement relatif des deux parties du châssis peut servir à orienter les roues décentrées orientables dans la direction prédéterminée. Ainsi, le moyen de blocage directionnel automatique peut être configuré pour bloquer au moins une roue décentrée orientable blocable par le mouvement relatif des deux parties du châssis.

De préférence, au moins une des deux parties du châssis peut comprendre au moins un bras de longueur variable (autrement appelé « bras extensible ») adapté pour contrôler la distance entre l'au moins une roue entraînée et l'au moins une roue décentrée orientable blocable, au moins une roue décentrée orientable blocable étant positionnée à une extrémité du bras de longueur variable.

Selon un ou plusieurs modes de réalisation, le bras extensible peut être d'une part, supporté par au moins une roue décentrée orientable blocable, et d'autre part, connecté à une portion non motorisée du châssis, le châssis comportant également une portion motorisée supportant la roue entraînée par la machine électrique.

Selon un ou plusieurs modes de réalisation, le bras extensible peut être sensiblement horizontal et peut comprendre un axe principal sensiblement parallèle à la direction longitudinale du châssis. Ainsi, le bras de longueur variable peut avantageusement être positionné dans le sens longitudinal. Ainsi, la distance entre la roue entraînée et la roue décentrée orientable blocable peut être augmentée et l'augmentation de cette distance augmente l'effet « 5^{ème} roue », entraînant ainsi une manoeuvrabilité facilitée du système. En effet, en augmentant cette distance, le point de pivot généré est positionné au plus près du barycentre (le centre de gravité par exemple) de l'attelage constitué par le système de propulsion attelé à l'objet roulant. Un tel positionnement du point de pivot permet de limiter l'espace nécessaire pour manoeuvrer l'ensemble, notamment lors de la rotation et/ou le déplacement de l'attelage dans des pièces et/ou des couloirs exigus, lorsqu'au moins une roue décentrée orientable est bloquée directionnellement.

Selon un ou plusieurs modes de réalisation, le bras extensible peut être déplaçable par rapport à la portion non motorisée (selon l'axe parallèle à la direction longitudinale du châssis) au moyen d'un actuateur, tel qu'un vérin, lui-même relié audit bras extensible et à la portion non motorisée du châssis.

Selon une variante de l'invention, les deux parties du châssis peuvent être reliées par une structure articulée en partie centrale du châssis entre la roue entraînée et au moins une roue décentrée orientable blocable. La structure articulée permet à la fois d'utiliser le mouvement relatif de rotation entre les deux parties du châssis pour bloquer au moins une roue décentrée orientable blocable de manière automatique, et à la fois de faciliter les opérations de préhension et de levage des roues de l'objet roulant. En effet, en permettant un mouvement de rotation entre les deux parties du châssis, on peut abaisser les moyens de préhension à proximité du niveau du sol pour faciliter la préhension des roues de l'objet roulant, puis par un mouvement de rotation inverse, assurer le levage des roues de l'objet roulant.

De préférence, la structure articulée peut comprendre d'une part, une première portion de châssis supportée par l'au moins une roue motorisée, et peut comprendre d'autre part, une deuxième portion de châssis supportée par au moins une roue décentrée orientable blocable, de préférence deux roues décentrées orientables blocables.

Selon une variante de l'invention, les portions de châssis peuvent être articulées l'une par rapport à l'autre autour d'un axe de rotation horizontal, par exemple sensiblement perpendiculaire à la direction longitudinale du châssis.

De manière préférée, au moins une des roues décentrées orientables peut comprendre un moyen de freinage et/ou un moyen de blocage en rotation, par exemple de manière à servir de frein de parking. Le moyen de freinage permet de ralentir la rotation de la roue décentrée orientable autour de son axe de rotation horizontal : ainsi il ralentit le système. Le moyen de blocage en rotation de la roue décentrée orientable empêche la rotation de la roue décentrée orientable autour de son axe de rotation horizontal. De ce fait, le moyen de blocage en rotation peut par exemple être enclenché lorsque le système de propulsion est à l'arrêt pour le maintenir à l'arrêt en position sécurisée.

Le moyen de freinage et le moyen de blocage en rotation peuvent être constitués par un seul et même moyen qui permet à la fois de freiner le système (le ralentir) et de le maintenir à l'arrêt.

Les moyens de freinage et de blocage en rotation peuvent être de tout type connu de l'homme du métier, un moyen de freinage par câble avec serrage d'un étrier contre la roue par exemple. Un frein de parking peut notamment être utilisé pour éviter tout mouvement intempestif du système, par exemple lorsque le système, attelé ou non, est positionné sur un plan en pente, le moyen de freinage empêchant ainsi l'entraînement du système dans la pente.

L'invention concerne aussi un attelage comprenant un objet roulant et un système de propulsion électrique tel que décrit précédemment, l'objet roulant étant attelé au système de propulsion électrique par les moyens d'attelage. En effet, un tel attelage permet de manipuler des objets roulants lourds et/ou encombrants en limitant les efforts et en améliorant les capacités de manoeuvrabilité de l'ensemble.

L'invention concerne également un procédé pour bloquer directionnellement au moins une roue décentrée orientable d'un système de propulsion électrique tel que décrit précédemment. Dans ce procédé, on effectue un mouvement de l'objet roulant et/ou du système de propulsion électrique pour positionner la (au moins une) roue décentrée orientable blocable dans la direction prédéterminée et on bloque directionnellement cette roue décentrée orientable blocable de manière automatique. Ainsi, le procédé de blocage directionnel est simple et ne demande pas d'intervention complexe de la part de l'utilisateur.

Selon un mode de réalisation du procédé de l'invention, on peut effectuer un mouvement de rotation et/ou de translation d'au moins une partie du châssis, relativement à l'autre partie du châssis pour positionner la (au moins une) roue décentrée orientable blocable dans la direction prédéterminée et on bloque (au moins) cette roue décentrée orientable blocable de manière automatique. En effet, utiliser la liaison entre les deux parties du châssis permet d'orienter les roues décentrées orientables blocables dans la direction prédéterminée et d'éloigner les roues décentrées orientables blocables de la roue entraînée, améliorant ainsi la manoeuvrabilité du système.

De manière avantageuse, on peut augmenter la longueur du bras de longueur variable à sa position maximale de manière à écarter au maximum la roue entraînée de la roue décentrée orientable blocable (ou des roues décentrées orientables blocables, le système comprenant de préférence deux roues de ce type). Puis on diminue légèrement la longueur du bras de longueur variable pour positionner la roue décentrée orientable blocable (ou les roues décentrées orientables blocables) dans la direction opposée à la roue entraînée. Par diminution légère de la longueur du bras, on entend la diminution juste suffisante pour permettre l'orientation des roues décentrées orientables dans la direction opposée à la roue entraînée. Cette diminution suffisante permet d'orienter les roues décentrées orientables blocables dans la direction opposée à la roue entraînée, ce qui permet d'augmenter la distance de l'effet 5^{ème} roue au maximum. En effet, en continuant la diminution de la longueur du bras, l'effet 5^{ème} roue sera amoindri car la distance entre la roue entraînée et la roue décentrée orientable blocable serait réduit. Puis, on bloque automatiquement au moins une des roues décentrées orientables blocables (de préférence on bloque deux roues de ce type) dans cette direction. On peut par exemple réduire la longueur du bras variable jusqu'à ce que le blocage directionnel automatique se produise et arrêter la réduction de la longueur du bras une fois le blocage directionnel obtenu. Ainsi, l'effet 5^{ème} roue est optimal. On peut à partir de cet instant ré-augmenter la longueur des bras pour maximiser l'effet 5^{ème} roue.

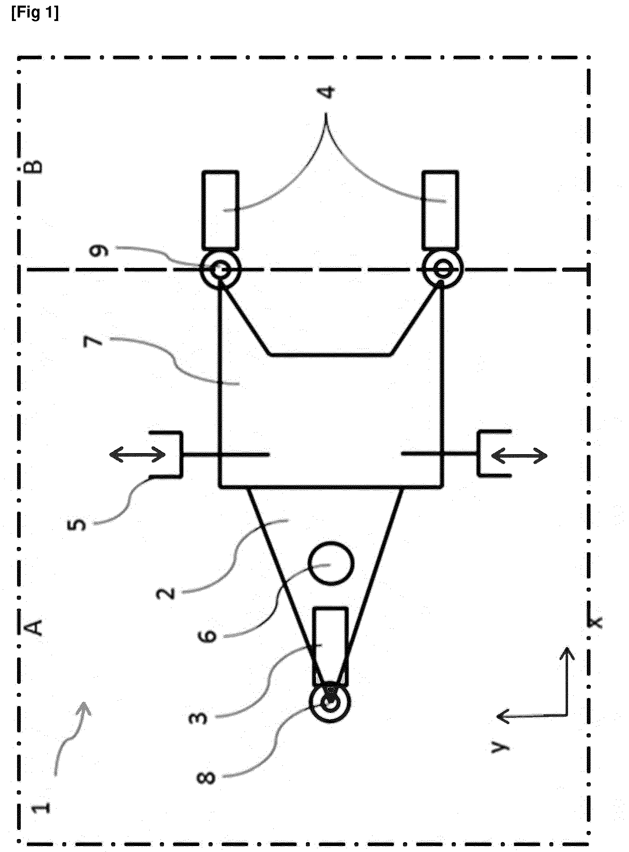

La figure 1 illustre, schématiquement et de manière non limitative, un système de propulsion électrique 1 selon un mode de réalisation de l'invention. La figure 1 est une vue de dessus du système de propulsion électrique 1. Le système de propulsion électrique 1 comprend un châssis 2. L'axe x correspond à l'axe longitudinal du châssis 2 et à la direction principale de déplacement du système de propulsion 1, et l'axe y correspond à l'axe latéral du châssis 2 (l'axe z non représenté est vertical). Le châssis 2 supporte trois roues (alternativement le châssis 2 peut comprendre quatre roues). Le châssis 2 supporte, à l'une de ses extrémités longitudinales, une roue 3 (alternativement le châssis 2 peut supporter deux roues 3), qui est une roue entraînée par une machine électrique (non représentée). La roue 3 est orientable par rapport au châssis 2, autour d'un axe vertical 8. A l'autre extrémité longitudinale du châssis, le châssis 2 supporte deux roues 4, qui sont deux roues non entraînées par une machine électrique. Ces deux roues 4 sont des roues décentrées orientables autour d'axes verticaux 9. Le système de propulsion électrique 1 comprend en outre des moyens d'attelage 5.

Les roues décentrées orientables non entraînées 4 peuvent être bloquées directionnellement, par un moyen de blocage directionnel automatique non représenté. Ce moyen de blocage directionnel automatique permet par exemple de bloquer les roues lorsqu'elles sont orientées selon une direction prédéterminée, par exemple selon la direction longitudinale ici. Sur la figure 1, les roues décentrées orientables 4 sont orientées dans une direction opposée à la roue entraînée 3 (du côté opposée à la roue entraînée 3) par rapport aux axes verticaux 9 de ces roues décentrées orientables 4. La vue de dessus de la figure 1 est divisée en deux demi-plans A et B. Le demi-plan A est situé à gauche de la figure 1, le demi-plan B est situé à droite de la figure 1. Ces deux demi-plans A et B sont délimités et séparés par la droite reliant les deux axes verticaux 9 en vue de dessus. La roue entraînée 3 est située sur le demi-plan A, à gauche des deux axes verticaux 9 alors que les roues décentrées orientables 4 sont situées sur le demi-plan B à droite des axes verticaux 9.

Les roues décentrées orientables 4, telles que représentées sur la figure 1, sont bloquées dans une direction parallèle à l'axe longitudinal. En d'autres termes, en vue de dessus, la droite formée d'une part par le point représentant chaque axe vertical 9 et d'autre part par le centre de la roue décentrée orientable 4 associée à cet axe vertical 9 est sensiblement longitudinale.

Selon le mode de réalisation illustré, le système de propulsion électrique 1 comprend deux moyens d'attelage 5 de part et d'autre du châssis selon la direction latérale (axe y) afin de réaliser l'attelage au moyen de deux roues de l'objet roulant (non représenté). Les moyens d'attelage 5 sont représentés de façon simplifiée en tant que pinces. Le déplacement latéral des moyens d'attelage est indiqué par une double flèche. Ce déplacement latéral peut servir à la préhension et à l'orientation des roues de l'objet roulant. Les moyens d'attelage 5 sont placés, dans la direction x, entre la roue motorisée 3 et les roues décentrées orientables 4.

De plus, le système de propulsion électrique 1 comprend un guidon 6, par exemple sous la forme d'une tige équipée d'une poignée (non représentée).

En outre, le système de propulsion électrique 1 comporte une plateforme 7 de support (par exemple d'un utilisateur). La plateforme 7 est située à l'extrémité du châssis 2 qui supporte les roues non motorisées 4.

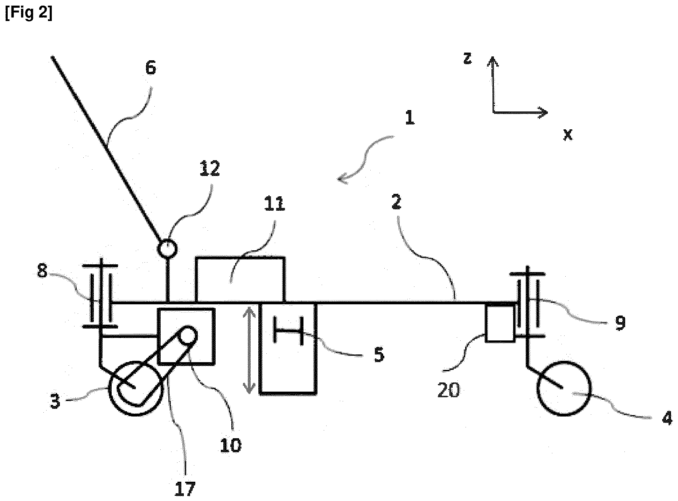

La figure 2 illustre, schématiquement et de manière non limitative, un système de propulsion électrique 1 selon une première variante de réalisation de l'invention. La figure 2 est une vue de côté du système de propulsion électrique 1. Le système de propulsion électrique 1 comprend un châssis 2. L'axe x correspond à l'axe longitudinal du châssis 2 et à la direction principale de déplacement du système de propulsion, et l'axe z correspond à l'axe vertical du châssis 2, l'axe y (non représenté) correspond à l'axe transversal. Le châssis 2 supporte trois roues. Le châssis 2 supporte une roue 3, qui est une roue entraînée par une machine électrique 10 au moyen d'un entraînement 17, par exemple une courroie ou une chaîne (alternativement la machine électrique 10 peut être reliée directement à la roue 3). La roue 3 est orientable par rapport au châssis 2, autour d'un axe vertical 8. La machine électrique 10 peut être solidaire du pivot 8 de la roue motorisée 3. A l'autre extrémité, le châssis 2 supporte deux roues 4, qui sont deux roues non entraînées par une machine électrique. Les roues 4 sont décentrées orientables par rapport au châssis 2 autour d'axes verticaux 9. Le système de propulsion électrique 1 comprend en outre des moyens d'attelage 5. Selon le mode de réalisation illustré, le système de propulsion électrique 1 comprend deux moyens d'attelage 5 de part et d'autre du châssis 2 selon la direction latérale (axe y) afin de réaliser l'attelage au moyen de deux roues de l'objet roulant (non représenté). Les moyens d'attelage 5 sont représentés de façon simplifiée en tant que pinces. Le déplacement vertical des moyens d'attelage 5 est indiqué par une double flèche. Ce déplacement vertical des moyens d'attelage permet notamment le levage des roues de l'objet roulant. Les moyens d'attelage 5 sont placés, dans la direction x, entre la roue motorisée 3 et les roues décentrées orientables 4.

Telles que représentées sur la figure 2, les roues décentrées orientables 4 sont bloquées dans la direction longitudinale x et dans la direction opposée à la roue entraînée 3 par rapport aux axes verticaux 9 de ces roues décentrées orientables 4. Un moyen de blocage directionnel automatique 20 permet le blocage directionnel des roues décentrées orientables 4 dans la direction longitudinale. Ce ou ces moyens de blocage directionnel automatique 20 sont connectés d'une part au châssis 2 et d'autre part à chacune des roues décentrées orientables blocables 4. Il permet le blocage directionnel des roues décentrées orientables 4 autour de l'axe vertical 9 de manière automatique lorsque les roues décentrées orientables sont dans la direction longitudinale et dirigées dans la direction opposée à la roue entraînée 3.

De plus, le système de propulsion électrique 1 comprend un guidon 6 par exemple sous la forme d'une tige équipée d'une poignée (non représentée) reliée au châssis 2 par une articulation 12.

En outre, le système de propulsion électrique 1 comporte une batterie 11. La batterie 11 est placée sur le châssis 2 à proximité de la machine électrique 10 et de la roue motorisée 3.

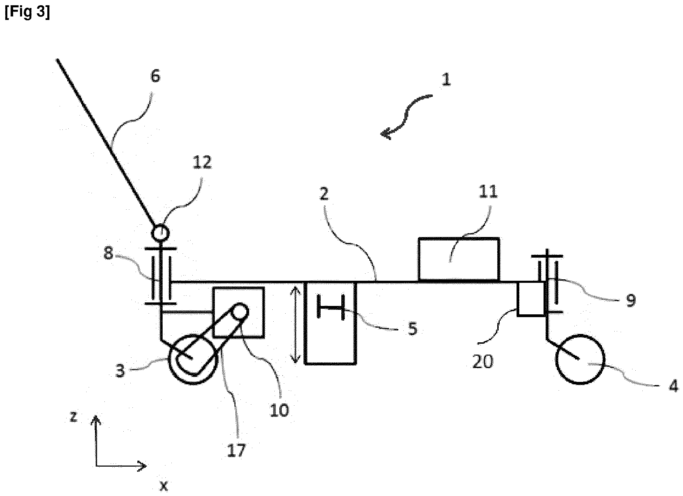

La figure 3 illustre, schématiquement et de manière non limitative, un système de propulsion électrique 1 selon une deuxième variante de réalisation de l'invention. La figure 3 est une vue de côté du système de propulsion électrique 1. Le système de propulsion électrique 1 comprend un châssis 2. L'axe x correspond à l'axe longitudinal du châssis 2 et à la direction principale de déplacement du système de propulsion, et l'axe z correspond à l'axe vertical du châssis 2. Le châssis 2 supporte trois roues. Le châssis 2 supporte une roue 3, qui est une roue entraînée par une machine électrique 10 au moyen d'un entraînement 17, par exemple une courroie ou une chaîne. La roue 3 est orientable par rapport au châssis 2, autour d'un axe vertical 8. La machine électrique 10 peut être solidaire du pivot 8 de la roue motorisée 3. A l'autre extrémité, le châssis 2 supporte deux roues 4, qui sont deux roues non entraînées par une machine électrique. Les roues 4 sont décentrées orientables par rapport au châssis autour d'axes verticaux 9.

Les deux roues décentrées orientables 4 peuvent être bloquées dans une direction prédéterminée autour de leur axe vertical 9, grâce au moyen de blocage directionnel automatique 20. Ce ou ces moyens de blocage directionnel automatique 20 sont connectés d'une part au châssis 2 et d'autre part à chacune des deux roues décentrées orientables 4. Chacune des roues décentrées orientables 4 est positionnée dans la direction longitudinale et opposée à la roue entraînée 3.

Le système de propulsion électrique 1 comprend en outre des moyens d'attelage 5. Selon le mode de réalisation illustré, le système de propulsion électrique 1 comprend deux moyens d'attelage 5 de part et d'autre du châssis selon la direction latérale (axe y) afin de réaliser l'attelage au moyen de deux roues de l'objet roulant (non représenté). Les moyens d'attelage 5 sont représentés de façon simplifiée en tant que pinces. Le déplacement vertical des moyens d'attelage 5 est indiqué par une double flèche. Ce déplacement vertical des moyens d'attelage permet notamment le levage des roues de l'objet roulant. Les moyens d'attelage 5 sont placés, dans la direction x, entre la roue motorisée 3 et les roues décentrées orientables 4.

De plus, le système de propulsion 1 comprend un guidon 6, par exemple sous la forme d'une tige équipée d'une poignée (non représentée) reliée à l'axe d'orientation verticale 8 de la roue motorisée 3 au moyen d'une articulation 12.

En outre, le système de propulsion électrique 1 comporte une batterie 11. La batterie 11 est placée sur le châssis 2 à proximité des roues non motorisées 4.

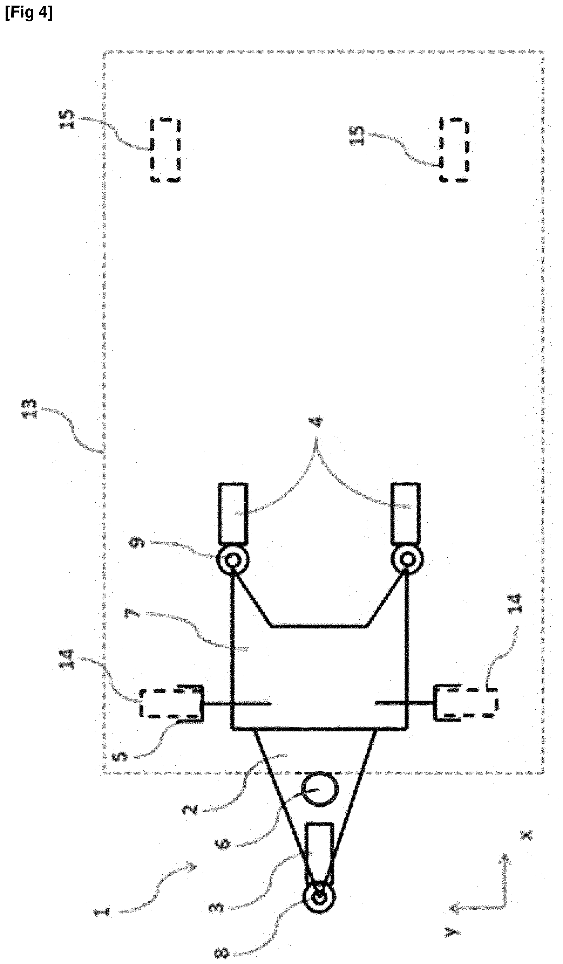

La figure 4 illustre, schématiquement et de manière non limitative, un système de propulsion électrique 1 selon un mode de réalisation de l'invention, attelé à un objet roulant 13. La figure 4 est une vue de dessus du système de propulsion électrique 1 et de l'objet roulant 13. Le mode de réalisation de la figure 4 correspond au mode de réalisation de la figure 1. L'objet roulant 13 peut être de tout type, notamment un lit roulant. L'objet roulant comprend deux roues 14, appelées arbitrairement roues arrières, et deux roues 15, appelées arbitrairement roues avant. Le système de propulsion électrique 1 comprend un châssis 2. L'axe x correspond à l'axe longitudinal du châssis 2 et à la direction principale de déplacement du système de propulsion, et l'axe y correspond à l'axe latéral du châssis 2. Le châssis supporte trois roues. Le châssis 2 supporte une roue 3, qui est une roue entraînée par une machine électrique (non représentée). La roue 3 est orientable par rapport au châssis 2, autour d'un axe vertical 8. A l'autre extrémité, le châssis 2 supporte deux roues 4, qui sont deux roues non entraînées par une machine électrique. Les roues 4 sont décentrées orientables par rapport au châssis 2 autour d'axes verticaux 9. Ces roues décentrées orientables 4 peuvent être bloquées directionnellement de manière automatique par un moyen de blocage directionnel automatique non représenté.

Le système de propulsion électrique 1 comprend en outre des moyens d'attelage 5. Selon le mode de réalisation illustré, le système de propulsion électrique 1 comprend deux moyens d'attelage 5 de part et d'autre du châssis selon la direction latérale (axe y) afin de réaliser l'attelage au moyen de deux roues arrières 14 de l'objet roulant. Les moyens d'attelage 5 sont représentés de façon simplifiée en tant que pinces. Les roues arrières 14 de l'objet roulant sont placées dans les pinces, et sont orientées sensiblement selon l'axe y, c'est-à-dire selon un axe perpendiculaire à l'axe longitudinal (axe x) du châssis 2. De plus, les roues avants 15 de l'objet roulant sont libres et non attelées.

Le système de propulsion électrique 1 comprend également un guidon 6 par exemple sous la forme d'une tige équipée d'une poignée (non représentée) articulée par rapport au châssis 2.

En outre, le système de propulsion électrique 1 comporte une plateforme 7 de support (par exemple d'un utilisateur). La plateforme 7 est située à l'extrémité du châssis 2 qui supporte les roues non motorisées 4. Pour le mode de réalisation de la figure 4, les moyens d'attelage 5, les roues non motorisées 4, la plateforme 7, et une majeure partie du châssis 2 sont situées en-dessous de l'objet roulant. Seuls la roue motorisée 3 et le guidon 6 peuvent dépasser de l'objet roulant 13 dans la direction longitudinale x du châssis 2.

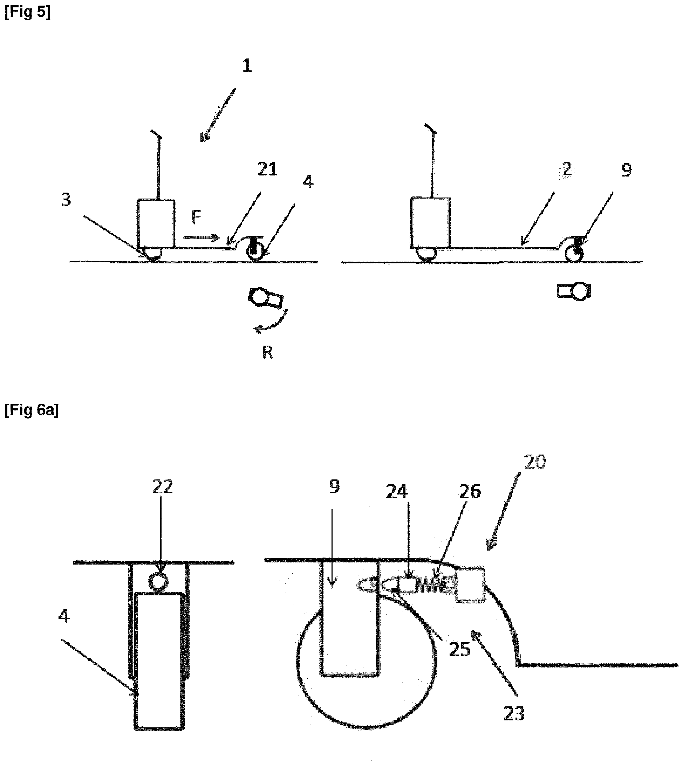

La figure 5 illustre, de manière schématique et non limitative, des étapes d'un premier procédé pour bloquer des roues décentrées orientables dans une direction prédéterminée. Pour cette figure, la partie inférieure représente la position de la roue décentrée orientable en vue de dessus.

Sur cette figure, le système de propulsion 1 comprend un châssis 2 en deux parties. L'une des deux parties, dite première partie, comprend un bras de longueur variable 21. L'autre partie, dite deuxième partie, supporte une roue entraînée 3 par une machine électrique non représentée. La première partie supporte deux roues décentrées orientables 4 qui peuvent être bloquées directionnellement autour de l'axe vertical 9.

Alternativement, le système pourrait comprendre plusieurs bras de longueur variable, chaque bras de longueur variable pouvant comporter une ou plusieurs roues décentrées orientables, sans sortir du cadre de l'invention.

Le schéma de gauche représente le bras de longueur variable 21 en cours d'allongement représentée par la flèche F. Les roues décentrées orientables 4 sont initialement dans une direction opposée à la direction de la roue entraînée 3 par rapport à leur axe vertical 9. En vue de côté, les axes verticaux 9 des roues décentrées orientables 4 se trouvent entre le centre de chacune des roues décentrées orientables 4 et le centre de la roue entraînée 3. Lors de l'allongement du bras de longueur variable 21, les roues décentrées orientables tendent à s'orienter dans la direction opposée au déplacement du bras de longueur variable. Pour se faire, elles tournent autour de leurs axes verticaux 9 suivant la rotation R ou suivant la rotation opposée à R. Elles sont alors dirigées vers la roue entraînée 3 comme représentées sur le schéma de droite lorsque le bras de longueur variable suit la course du vérin, par exemple, à son allongement maximal. En vue de côté, les centres de chacune des roues décentrées orientables 4 se trouvent alors entre le centre de la roue entraînée 3 et leurs axes verticaux 9.

La figure 6a représente de manière schématique et non limitative, un premier mode de réalisation d'un moyen de blocage directionnel automatique 20 selon l'invention.

Sur cette figure, la roue décentrée orientable 4 peut tourner librement autour de son axe vertical 9. La roue décentrée orientable 4 est une roue décentrée orientable blocable. Pour se faire, elle comprend un premier élément connecteur 22, ici un élément femelle matérialisé par un orifice comprenant une partie cylindrique.

L'axe vertical 9 de la roue décentrée orientable 4 est connecté au châssis du système de propulsion selon l'invention. Sur ce châssis 2, est positionné un deuxième élément connecteur 23, apte à coopérer avec le premier élément connecteur 22 pour bloquer la roue décentrée orientable 4 dans une direction prédéterminée. Ce deuxième élément connecteur 23 est ici un élément mâle comprenant un pion 24. Le diamètre du pion 24 est inférieur au diamètre de l'orifice de l'élément femelle 22 de la roue décentrée orientable 4 de manière à faciliter l'insertion de l'élément mâle 23 dans l'élément femelle 22. Le pion 24 comprend une partie conique 25, de manière à faciliter l'entrée de l'élément mâle 23 dans l'élément femelle 22.

Par ailleurs, de manière à permettre le blocage directionnel automatique des roues décentrées orientables 4, le pion 24 est armé par un ressort 26. Lorsque la roue décentrée orientable 4 n'est pas dans la direction prédéterminée, l'orifice de l'élément femelle 22 ne se trouve pas en face de l'élément mâle 23. Le ressort 26 est alors comprimé : il est armé, prêt à engager le pion 24 dans l'élément femelle 22. Lorsque la roue décentrée orientable 4 s'oriente dans la direction prédéterminée, l'orifice de l'élément femelle 22 se trouve alors en face de l'élément mâle 23. Le ressort 26 se décomprime alors et pousse le pion 25 de l'élément mâle 23 dans l'élément femelle 22 entraînant un blocage directionnel de la roue décentrée orientable 4 de manière automatique.

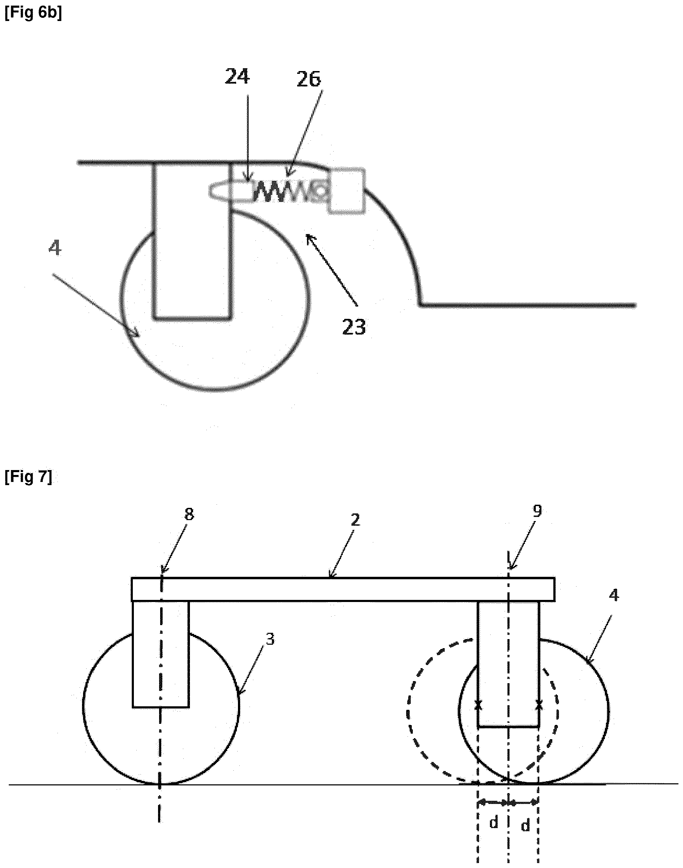

La figure 6b illustre le pion 24 de l'élément mâle 23 engagé dans l'élément femelle, une fois que la roue décentrée orientable 4 se soit positionnée dans la direction prédéterminée permettant le blocage automatique. Le ressort 26 est alors relâché.

La figure 7 illustre le positionnement relatif d'une roue décentrée orientable 4 dans une (première) direction en trait continu et dans la direction opposée (faisant un angle de 180° par rapport à la première direction) en traits pointillés. La roue décentrée orientable 4 s'oriente naturellement autour de son axe vertical 9, qui sert d'axe de rotation pour l'orientation de la roue décentrée orientable, en fonction du sens de déplacement du système de propulsion. Cette orientation naturelle est due au désaxage d entre l'axe vertical 9 et le centre de la roue décentrée orientable 4.

La roue décentrée orientable 4 ainsi que la roue entraînée 3 sont connectés au châssis 2. La roue entraînée 3 n'est pas décentrée orientable. En effet, son axe vertical 8 passe par le centre de la roue entraînée 3. Alternativement, la roue 3 peut être une roue décentrée orientable.

Dans cet exemple de réalisation, la distance entre l'axe vertical 8 et l'axe vertical 9 est fixe.

Suivant l'orientation de la roue décentrée orientable 4, la distance entre les axes des roues décentrées orientables blocables 4 et de la roue entraînée 3 peut être modifiée. En effet, lorsque la roue décentrée orientable 4 est bloquée dans la deuxième direction, c'est-à-dire en direction de la roue entraînée, la distance entre les centres des deux roues (de la roue entraînée 3 et de la roue décentrée orientable 4) correspond à la distance entre les axes verticaux 8 et 9, diminuée du désaxage d.

Au contraire, lorsque la roue décentrée orientable 4 est bloquée dans la première direction, c'est-à-dire dans la direction opposée à la roue entraînée, l'axe vertical 9 étant situé entre le centre de la roue entraînée 3 et le centre de la roue décentrée orientable 4 en vue de côté, la distance entre les centres des deux roues (de la roue entraînée 3 et de la roue décentrée orientable 4) correspond à la distance entre les axes verticaux 8 et 9, augmentée du désaxage d.

En d'autres termes, lorsque la roue est bloquée dans la première direction (roue orientée dans la direction opposée à la roue entraînée 3 par rapport à l'axe vertical 9), la distance entre les centres de la roue entraînée 3 et de la roue décentrée orientable 4 est maximale. Lorsqu'on veut augmenter au maximum les capacités de manoeuvrabilité, notamment dans des espaces très restreints, augmenter la distance entre les centres de la roue entraînée 3 et de la roue décentrée orientable 4 permet d'éloigner le point de pivot et de pouvoir le positionner au plus près du centre de l'attelage et ainsi gagner en manoeuvrabilité.

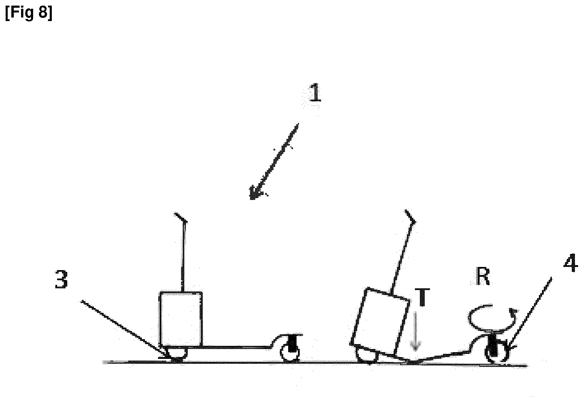

La figure 8 représente, de manière schématique et non limitative des étapes d'un deuxième procédé pour orienter la roue décentrée orientable 4 dans la direction prédéterminée permettant le blocage directionnel de la roue décentrée orientable 4.

Le système de propulsion 1 comprend un châssis avec une roue entraînée 3 et deux roues décentrées orientables 4. Le châssis comprend une structure articulée reliant au moins deux parties du châssis. Lors de l'articulation de la structure articulée du châssis, par exemple par un mouvement vers le bas T de la structure articulée, le désaxage de la roue décentrée orientable 4 génère l'orientation de la roue décentrée orientable 4 autour de son axe de pivot décentré qui ici n'est plus vertical. Cette inclinaison de l'axe par rapport à l'axe vertical permet de provoquer la rotation de le roue pour la diriger dans la direction opposée à la roue entraînée 3. Ainsi, un mouvement généré sur la structure articulée du châssis peut être utilisé pour orienter la roue décentrée orientable 4 dans la direction prédéterminée. Un moyen de blocage directionnel automatique peut alors bloquer la roue directionnellement.

On observe sur la figure 8 que la roue 4 est initialement orientée en direction de la roue entraînée 3 sur le schéma de gauche. Suite au mouvement vers le bas T entraînant le pliage des deux parties du châssis, la roue décentrée orientable 4 pivote autour de son axe vertical (initialement vertical) pour s'orienter dans la direction opposée à la roue entraînée 3.

Lorsque le système comprend également une glissière longitudinale, on peut ensuite écarter les roues décentrés orientables 4 de la roue entraînée 3 pour les positionner au plus près du centre de l'objet roulant.

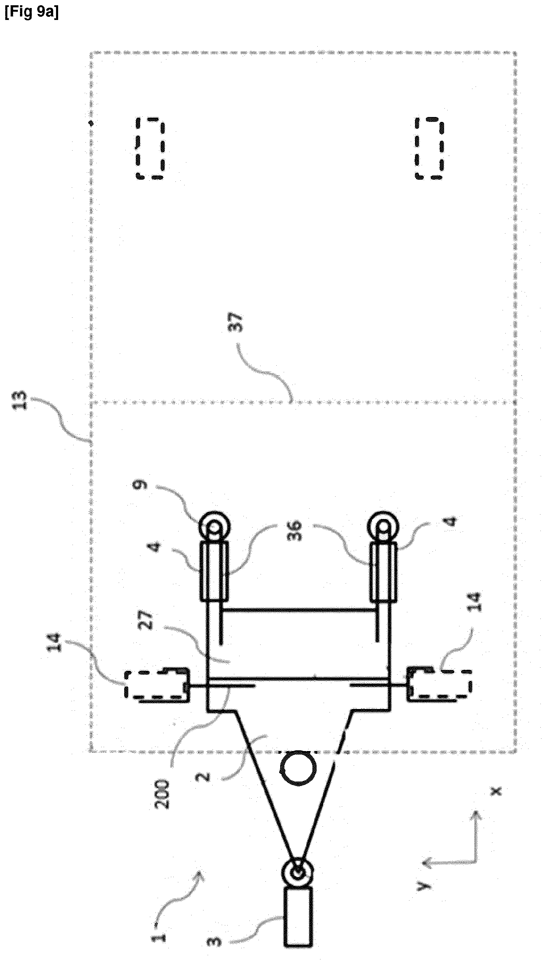

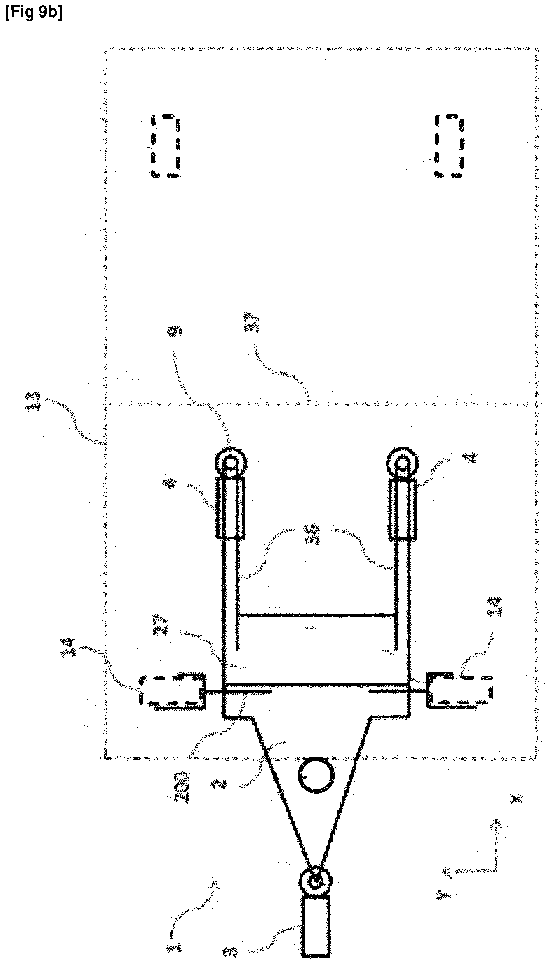

Les figures 9a et 9b illustrent, schématiquement et de manière non limitative, un ou plusieurs modes de réalisation adaptés pour assister l'utilisateur à manoeuvrer l'attelage et comprenant deux bras extensibles 36 positionnés sur le châssis 2 permettant de modifier la distance entre l'au moins une roue décentrée orientable 4 et la roue entraînée 3 (et la distance entre la roue décentrée orientable 4 et les moyens de préhension et de levage 200 des roues 14 de l'objet roulant 13). Chaque bras extensible 36 est d'une part, supporté par une roue décentrée orientable 4 au travers de l'axe vertical 9, et d'autre part, connecté à la portion non motorisée 27 du châssis. Avantageusement, les bras extensibles 36 permettent de positionner les roues décentrées orientables 4 au plus près de la partie centrale 37 de l'objet roulant (selon la direction longitudinale du châssis). Il résulte une manoeuvrabilité dite « effet 5ème roue » augmentée, notamment lors de la rotation et/ou le déplacement de l'attelage dans des pièces et/ou des couloirs exigus, en particulier lorsque le mouvement directionnel de ladite roue décentrée orientable 4 est bloqué. En référence à la figure 9a, les bras extensibles 36 sont dans une position rétractée. En référence à la figure 9b, le ou les actuateurs est actionnés de manière à allonger les bras extensibles 36 et augmenter la distance entre les roue décentrées orientables 4 et la roue entraînée 3 (et la distance entre les roues décentrées orientables 4 des moyens de préhension et de levage 200 des roues 14 de l'objet roulant 13).

## Revendications

1. Système de propulsion électrique amovible (1) pour un objet roulant (13), ledit système de propulsion (1) comprenant un châssis (2) muni d'au moins une roue entrainée (3) par une machine électrique (10) et d'au moins une roue non entraînée (4), au moins une desdites au moins une roue non entraînée (4) comprenant une roue décentrée orientable, ledit système de propulsion électrique (1) comprenant des moyens d'attelage (5) dudit système de propulsion électrique (1) audit objet roulant (13), lesdits moyens d'attelage (5) comprenant des moyens de préhension et de levage (200) d'au moins une roue (14) dudit objet roulant (13), le système de propulsion électrique (1) comprenant un moyen de blocage directionnel automatique (20) pour bloquer, dans une direction prédéterminée, la rotation autour d'un axe vertical (9) d'au moins une desdites roues décentrées orientables (4), de préférence la direction prédéterminée étant selon l'axe longitudinal du châssis (2), l'axe longitudinal (x) étant défini par la direction principale de déplacement du châssis (2) et, **caractérisé en ce que** le châssis (2) comprend au moins deux parties reliées entre elles par une liaison pivot d'axe transversal et/ou par une glissière longitudinale, ledit moyen de blocage directionnel automatique (20) étant configuré pour bloquer au moins une desdites roues décentrées orientables blocables par le mouvement relatif desdites deux parties.

2. Système de propulsion électrique amovible (1) selon la revendication 1, pour lequel le moyen de blocage directionnel automatique (20) bloque au moins une desdites roues décentrées orientables blocables dans la direction de la roue entraînée (3).

3. Système de propulsion électrique amovible (1) selon la revendication 1, pour lequel le moyen de blocage directionnel automatique (20) bloque au moins une desdites roues décentrées orientables blocables dans la direction opposée à la roue entraînée (3).

4. Système de propulsion électrique amovible (1) selon l'une des revendications précédentes, pour lequel le système de propulsion électrique (1) comprend au moins deux roues décentrées orientables blocables, le moyen de blocage directionnel automatique (20) bloquant lesdites au moins deux roues décentrées orientables blocables dans ladite direction prédéterminée.

5. Système de propulsion électrique amovible (1) selon l'une des revendications précédentes, pour lequel lesdits moyens d'attelage (5) comprennent des moyens d'orientation d'au moins une roue dudit objet roulant dans une direction formant un angle non nul avec la direction longitudinale (x) dudit châssis (2) dudit système de propulsion électrique (1), de préférence lesdits moyens d'attelage (5) comprennent des moyens d'orientation d'au moins une roue dudit objet roulant dans une direction sensiblement perpendiculaire à la direction longitudinale (x) dudit châssis (2) dudit système de propulsion électrique (1).

6. Système de propulsion électrique amovible (1) selon l'une des revendications précédentes, pour lequel ledit moyen de blocage directionnel automatique (20) comprend au moins deux éléments connecteurs (22, 23) configurés pour coopérer l'un avec l'autre de manière à assurer le blocage directionnel, un premier élément connecteur étant positionné sur au moins une desdites roues décentrées orientables blocables et un deuxième élément connecteur étant positionné sur ledit châssis, de préférence l'un desdits deux éléments connecteurs est un élément mâle (23) et l'autre desdits deux éléments connecteurs est un élément femelle (22) , l'emboitement dudit élément mâle dans ledit élément femelle assurant ledit blocage directionnel.

7. Système de propulsion électrique amovible (1) selon la revendication 6, pour lequel le moyen de blocage directionnel automatique (20) comprend au moins deux éléments femelles (22) et/ou au moins deux éléments mâles (23).

8. Système de propulsion électrique amovible (1) selon l'une des revendications 6 ou 7, pour lequel lesdits éléments mâles (23) comprennent au moins un pion (24), un doigt et/ou une clavette.

9. Système de propulsion électrique amovible (1) selon les revendications 6 à 8, pour lequel lesdits éléments femelles (22) comprennent des trous cylindriques, des trous oblong et/ou des rainures.

10. Système de propulsion électrique amovible (1) selon l'une des revendications précédentes, pour lequel ledit moyen de blocage directionnel automatique (20) comprend un moyen de commande de déblocage, ledit moyen de commande de déblocage comprenant de préférence un électroaimant, le moyen de commande de déblocage étant de préférence manuel.

11. Système de propulsion électrique amovible (1) selon l'une des revendications précédentes, pour lequel le moyen de blocage directionnel automatique (20) bloque au moins une desdites roues décentrées orientables blocables par le mouvement opposé à ladite direction prédéterminée du système de propulsion électrique (1) et/ou de l'objet roulant (13).

12. Système de propulsion électrique amovible (1) selon l'une des revendications précédentes, pour lequel au moins une desdites deux parties comprend au moins un bras de longueur variable (36), au moins une desdites roues décentrées orientables blocables étant positionnée sensiblement à une extrémité dudit bras de longueur variable (36).

13. Système de propulsion électrique amovible (1) selon la revendication 12, pour lequel lesdites deux parties sont reliées par une structure articulée en partie centrale du châssis (2) entre au moins une des roues entraînées (3) et au moins une desdites roues décentrées orientables (4).

14. Attelage comprenant un objet roulant (13) et un système de propulsion électrique (1) selon l'une des revendications précédentes, ledit objet roulant (13) étant attelé audit système de propulsion électrique (1) par lesdits moyens d'attelage (5).

15. Procédé pour bloquer directionnellement au moins une desdites roues décentrées orientables blocables d'un système de propulsion électrique amovible (1) selon l'une des revendications 1 à 13, pour lequel on effectue un mouvement de l'objet roulant (13) et/ou du système de propulsion électrique (1) pour positionner au moins une desdites roues décentrées orientables blocables dans ladite direction prédéterminée, et on bloque directionnellement au moins une desdites roues décentrées orientables blocables, de manière automatique.

16. Procédé pour bloquer directionnellement au moins une desdites roues décentrées orientables d'un système de propulsion électrique amovible (1) selon l'une des revendications 1 à 13, pour lequel on effectue un mouvement de rotation et/ou de translation d'au moins une des parties du châssis (2), relativement à l'autre partie du châssis (2) pour positionner au moins une desdites roues décentrées orientables blocables dans ladite direction prédéterminée, et on bloque directionnellement au moins une desdites roues décentrées orientables blocables, de manière automatique.

17. Procédé pour bloquer directionnellement au moins une desdites roues décentrées orientables blocables d'un système de propulsion électrique amovible (1) selon l'une des revendications 12 à 13, pour lequel on augmente la longueur dudit bras de longueur variable (36) à sa position maximale puis on diminue la longueur dudit bras de longueur variable (36) pour positionner au moins une desdites roues décentrées orientables blocables dans la direction opposée à la roue entraînée (3) et on bloque de manière automatique au moins une desdites roues décentrées orientables blocables dans ladite direction opposée à la roue entraînée (3).

## Patentansprüche

1. Abnehmbares elektrisches Antriebssystem (1) für ein rollendes Objekt (13), wobei das Antriebssystem (1) einen Rahmen (2) umfasst, der mit mindestens einem von einer elektrischen Maschine (10) angetriebenen Rad (3) und mit mindestens einem nicht angetriebenen Rad (4) versehen ist, wobei mindestens eines der mindestens ein nicht angetriebenes Rad (4) ein schwenkbares dezentriertes Rad umfasst, wobei das elektrische Antriebssystem (1) Mittel zum Ankuppeln (5) des elektrischen Antriebssystems (1) an das rollende Objekt (13) umfasst, wobei die Mittel zum Ankuppeln (5) Mittel zum Greifen und Heben (200) mindestens eines Rads (14) des rollenden Objekts (13) umfassen, wobei das elektrische Antriebssystem (1) ein Mittel zur automatischen Richtungsblockierung (20) umfasst, um, in einer vorbestimmten Richtung, die Drehung mindestens eines der schwenkbaren dezentrierten Räder (4) um eine vertikale Achse (9) zu blockieren, wobei die vorbestimmte Richtung bevorzugt entlang der Längsachse des Rahmens (2) verläuft, wobei die Längsachse (x) durch die Hauptverlagerungsrichtung des Rahmens (2) definiert ist und, **dadurch gekennzeichnet, dass** der Rahmen (2) mindestens zwei Teile umfasst, die untereinander durch eine Drehgelenkverbindung mit Querachse und/oder durch eine Längsgleitschiene verbunden sind, wobei das Mittel zur automatischen Richtungsblockierung (20) dazu ausgestaltet ist, mindestens eines der blockierbaren schwenkbaren dezentrierten Räder durch die relative Bewegung der beiden Teile zu blockieren.

2. Abnehmbares elektrisches Antriebssystem (1) nach Anspruch 1, wobei das Mittel zur automatischen Richtungsblockierung (20) mindestens eines der blockierbaren schwenkbaren dezentrierten Räder in der Richtung des angetriebenen Rads (3) blockiert.

3. Abnehmbares elektrisches Antriebssystem (1) nach Anspruch 1, wobei das Mittel zur automatischen Richtungsblockierung (20) mindestens eines der blockierbaren schwenkbaren dezentrierten Räder in der zum angetriebenen Rad (3) entgegengesetzten Richtung blockiert.

4. Abnehmbares elektrisches Antriebssystem (1) nach einem der vorhergehenden Ansprüche, wobei das elektrische Antriebssystem (1) mindestens zwei blockierbare schwenkbare dezentrierte Räder umfasst, wobei das Mittel zur automatischen Richtungsblockierung (20) die mindestens zwei blockierbaren schwenkbaren dezentrierten Räder in der vorbestimmten Richtung blockiert.

5. Abnehmbares elektrisches Antriebssystem (1) nach einem der vorhergehenden Ansprüche, wobei die Mittel zum Ankuppeln (5) Mittel zum Schwenken mindestens eines Rads des rollenden Objekts in eine Richtung umfassen, die einen Winkel ungleich null mit der Längsrichtung (x) des Rahmens (2) des elektrischen Antriebssystems (1) bildet, wobei die Mittel zum Ankuppeln (5) bevorzugt Mittel zum Schwenken mindestens eines Rads des rollenden Objekts in eine Richtung umfassen, die im Wesentlichen senkrecht zu der Längsrichtung (x) des Rahmens (2) des elektrischen Antriebssystems (1) verläuft.

6. Abnehmbares elektrisches Antriebssystem (1) nach einem der vorhergehenden Ansprüche, wobei das Mittel zur automatischen Richtungsblockierung (20) mindestens zwei Verbindungselemente (22, 23) umfasst, die dazu ausgestaltet sind, miteinander so zusammenzuwirken, dass die Richtungsblockierung gewährleistet wird, wobei ein erstes Verbindungselement an mindestens einem der blockierbaren schwenkbaren dezentrierten Räder positioniert ist und wobei ein zweites Verbindungselement an dem Rahmen positioniert ist, wobei bevorzugt eines der beiden Verbindungselemente ein männliches Element (23) ist und das andere der beiden Verbindungselement ein weibliches Element (22) ist, wobei das Stecken des männlichen Elements in das weibliche Element die Richtungsblockierung gewährleistet.

7. Abnehmbares elektrisches Antriebssystem (1) nach Anspruch 6, wobei das Mittel zur automatischen Richtungsblockierung (20) mindestens zwei weibliche Elemente (22) und/oder mindestens zwei männliche Elemente (23) umfasst.

8. Abnehmbares elektrisches Antriebssystem (1) nach einem der Ansprüche 6 oder 7, wobei die männlichen Elemente (23) mindestens einen Stift (24), einen Finger und/oder einen Keil umfassen.

9. Abnehmbares elektrisches Antriebssystem (1) nach den Ansprüchen 6 bis 8, wobei die weiblichen Elemente (22) zylindrische Löcher, Langlöcher und/oder Nuten umfassen.

10. Abnehmbares elektrisches Antriebssystem (1) nach einem der vorhergehenden Ansprüche, wobei das Mittel zur automatischen Richtungsblockierung (20) ein Freigabebetätigungsmittel umfasst, wobei das Freigabebetätigungsmittel bevorzugt einen Elektromagneten umfasst, wobei das Freigabebetätigungsmittel bevorzugt manuell ist.

11. Abnehmbares elektrisches Antriebssystem (1) nach einem der vorhergehenden Ansprüche, wobei das Mittel zur automatischen Richtungsblockierung (20) mindestens eines der blockierbaren schwenkbaren dezentrierten Räder durch die zur vorbestimmten Richtung des elektrischen Antriebssystems (1) und/oder des rollenden Objekts (13) entgegengesetzte Bewegung blockiert.

12. Abnehmbares elektrisches Antriebssystem (1) nach einem der vorhergehenden Ansprüche, wobei mindestens einer der beiden Teile mindestens einen Arm von variabler Länge (36) umfasst, wobei mindestens eines der blockierbaren schwenkbaren dezentrierten Räder im Wesentlichen an einem Ende des Arms von variabler Länge (36) positioniert ist.

13. Abnehmbares elektrisches Antriebssystem (1) nach Anspruch 12, wobei die beiden Teile durch eine Struktur verbunden sind, die im mittleren Teil des Rahmens (2) zwischen mindestens einem der angetriebenen Räder (3) und mindestens einem der schwenkbaren dezentrierten Räder (4) angelenkt ist.

14. Gespann, das ein rollendes Objekt (13) und ein elektrisches Antriebssystem (1) nach einem der vorhergehenden Ansprüche umfasst, wobei das rollende Objekt (13) durch die Mittel zum Ankuppeln (5) an das elektrische Antriebssystem (1) angekuppelt ist.

15. Verfahren zum Richtungsblockieren mindestens eines der blockierbaren schwenkbaren dezentrierten Räder eines abnehmbaren elektrischen Antriebssystems (1) nach einem der Ansprüche 1 bis 13, bei dem man ein Bewegen des rollenden Objekts (13) und/oder des elektrischen Antriebssystems (1) vornimmt, um mindestens eines der blockierbaren schwenkbaren dezentrierten Räder in der vorbestimmten Richtung zu positionieren, und man mindestens eines der blockierbaren schwenkbaren dezentrierten Räder automatisch richtungsblockiert.

16. Verfahren zum Richtungsblockieren mindestens eines der blockierbaren schwenkbaren dezentrierten Räder eines abnehmbaren elektrischen Antriebssystems (1) nach einem der Ansprüche 1 bis 13, bei dem man ein Dreh- und/oder Translationsbewegen mindestens eines der Teile des Rahmens (2) relativ zu dem anderen Teil des Rahmens (2) vornimmt, um mindestens eines der blockierbaren schwenkbaren dezentrierten Räder in der vorbestimmten Richtung zu positionieren, und man mindestens eines der blockierbaren schwenkbaren dezentrierten Räder automatisch richtungsblockiert.

17. Verfahren zum Richtungsblockieren mindestens eines der blockierbaren schwenkbaren dezentrierten Rädern eines abnehmbaren elektrischen Antriebssystems (1) nach einem der Ansprüche 12 bis 13, bei dem man die Länge des Arms von variabler Länge (36) auf seine maximale Position vergrößert, dann die Länge des Arms von variabler Länge (36) verringert, um mindestens eines der blockierbaren schwenkbaren dezentrierten Räder in der zum angetriebenen Rad (3) entgegengesetzten Richtung zu positionieren, und man mindestens eines der blockierbaren schwenkbaren dezentrierten Räder in der zum angetriebenen Rad (3) entgegengesetzten Richtung automatisch blockiert.

## Claims

1. Removable electric propulsion system (1) for a rolling object (13), said propulsion system (1) comprising a chassis (2) provided with at least one wheel (3) driven by an electric machine (10) and with at least one non-driven wheel (4), at least one of said at least one non-driven wheel (4) comprising a steerable off-centre wheel, said electric propulsion system (1) comprising means (5) for hitching said electric propulsion system (1) to said rolling object (13), said hitching means (5) comprising means (200) for gripping and lifting at least one wheel (14) of said rolling object (13), the electric propulsion system (1) comprising an automatic directional blocking means (20) for blocking, in a predetermined direction, the rotation about a vertical axis (9) of at least one of said steerable off-centre wheels (4), preferably the predetermined direction being along the longitudinal axis of the chassis (2), the longitudinal axis (x) being defined by the main direction of movement of the chassis (2) and, **characterized in that** the chassis (2) comprises at least two parts connected to one another by a pivot connection of transverse axis and/or by a longitudinal slideway, said automatic directional blocking means (20) being configured to block at least one of said blockable steerable off-centre wheels by the relative movement of said two parts.

2. Removable electric propulsion system (1) according to Claim 1, for which the automatic directional blocking means (20) blocks at least one of said blockable steerable off-centre wheels in the direction of the driven wheel (3).

3. Removable electric propulsion system (1) according to Claim 1, for which the automatic directional blocking means (20) blocks at least one of said blockable steerable off-centre wheels in the direction opposite to the driven wheel (3).

4. Removable electric propulsion system (1) according to one of the preceding claims, for which the electric propulsion system (1) comprises at least two blockable steerable off-centre wheels, the automatic directional blocking means (20) blocking said at least two blockable steerable off-centre wheels in said predetermined direction.

5. Removable electric propulsion system (1) according to one of the preceding claims, for which said hitching means (5) comprise means for steering at least one wheel of said rolling object in a direction forming a non-zero angle with the longitudinal direction (x) of said chassis (2) of said electric propulsion system (1), preferably said hitching means (5) comprise means for steering at least one wheel of said rolling object in a direction substantially perpendicular to the longitudinal direction (x) of said chassis (2) of said electric propulsion system (1).

6. Removable electric propulsion system (1) according to one of the preceding claims, for which said automatic directional blocking means (20) comprises at least two connector elements (22, 23) configured to cooperate with one another so as to ensure the directional blocking, a first connector element being positioned on at least one of said blockable steerable off-centre wheels and a second connector element being positioned on said chassis, preferably one of said two connector elements is a male element (23) and the other of said two connector elements is a female element (22), the fitting of said male element into said female element ensuring said directional blocking.

7. Removable electric propulsion system (1) according to Claim 6, for which the automatic directional blocking means (20) comprises at least two female elements (22) and/or at least two male elements (23).

8. Removable electric propulsion system (1) according to either of Claims 6 and 7, for which said male elements (23) comprise at least one pin (24), finger and/or key.

9. Removable electric propulsion system (1) according to Claims 6 to 8, for which said female elements (22) comprise cylindrical holes, oblong holes and/or grooves.

10. Removable electric propulsion system (1)according to one of the preceding claims, for which said automatic directional blocking means (20) comprises an unblocking control means, said unblocking control means preferably comprising an electromagnet, the unblocking control means preferably being manual.

11. Removable electric propulsion system (1) according to one of the preceding claims, for which the automatic directional blocking means (20) blocks at least one of said blockable steerable off-centre wheels by the movement opposite to said predetermined direction of the electric propulsion system (1) and/or of the rolling object (13).

12. Removable electric propulsion system (1) according to one of the preceding claims, for which at least one of said two parts comprises at least one arm of variable length (36), at least one of said blockable steerable off-centre wheels being positioned substantially at an end of said arm of variable length (36).

13. Removable electric propulsion system (1) according to Claim 12, for which said two parts are connected by an articulated structure in the central part of the chassis (2) between at least one of the driven wheels (3) and at least one of said steerable off-centre wheels (4).

14. Hitch comprising a rolling object (13) and an electric propulsion system (1) according to one of the preceding claims, said rolling object (13) being hitched to said electric propulsion system (1) by said hitching means (5).

15. Method for directionally blocking at least one of said blockable steerable off-centre wheels of a removable electric propulsion system (1) according to one of Claims 1 to 13, for which a movement of the rolling object (13) and/or of the electric propulsion system (1) is effected in order to position at least one of said blockable steerable off-centre wheels in said predetermined direction, and at least one of said blockable steerable off-centre wheels is automatically directionally blocked.

16. Method for directionally blocking at least one of said steerable off-centre wheels of a removable electric propulsion system (1) according to one of Claims 1 to 13, for which a rotational and/or translational movement of at least one of the parts of the chassis (2), relative to the other part of the chassis (2), is effected in order to position at least one of said blockable steerable off-centre wheels in said predetermined direction, and at least one of said blockable steerable off-centre wheels is automatically directionally blocked.

17. Method for directionally blocking at least one of said blockable steerable off-centre wheels of a removable electric propulsion system (1) according to either of Claims 12 and 13, for which the length of said arm of variable length (36) is increased to its maximum position and then the length of said arm of variable length (36) is decreased in order to position at least one of said blockable steerable off-centre wheels in the direction opposite to the driven wheel (3) and at least one of said blockable steerable off-centre wheels is automatically blocked in said direction opposite to the driven wheel (3) .
